Europäisches Patentamt

European Patent Office

Office européen des brevets

(11) Veröffentlichungsnummer: **0 046 134**
**B1**

(12) **EUROPÄISCHE PATENTSCHRIFT**

(19)

(45) Veröffentlichungstag der Patentschrift:
**07.01.87**

(21) Anmeldenummer: **81730053.6**

(22) Anmeldetag: **29.05.81**

(51) Int. Cl.⁴: **F 16 L 9/16,** F 16 L 58/10,
B 29 C 53/56

(54) Verfahren zur Herstellung von innen und aussen mit Kunststoff beschichteten korrosionsgeschützten Mehrlagenrohren.

(30) Priorität: **11.08.80 DE 3030595**

(43) Veröffentlichungstag der Anmeldung:
**17.02.82 Patentblatt 82/7**

(45) Bekanntmachung des Hinweises auf die Patenterteilung:
**07.01.87 Patentblatt 87/2**

(84) Benannte Vertragsstaaten:
**FR GB IT SE**

(56) Entgegenhaltungen:
**DE - A - 2 339 707**
**GB - A - 352 323**

(73) Patentinhaber: **MANNESMANN Aktiengesellschaft,
Mannesmannufer 2, D-4000 Düsseldorf 1 (DE)**

(72) Erfinder: **Dietzel, Hans-Ulrich, Parkring 63, St. Leon-Rot
(DE)**
Erfinder: **Hahn, Rüdiger, Amselweg 19, D-6909 Walldorf
(DE)**
Erfinder: **Müffke, Walter, Silcherstrasse 5,
D-6901 Wiesenbach (DE)**

(74) Vertreter: **Meissner, Peter E., Dipl.-Ing. et al,
Patentanwälte Dipl.-Ing. Peter E. Meissner Dipl.-Ing.
Hans-Joachim Presting Herbertstrasse 22,
D-1000 Berlin 33 (DE)**

## Beschreibung

Die Erfindung betrifft ein Mehrlagenrohr, insbesondere für Kraftstoffleitungen von Kraftfahrzeugen gemäss dem Oberbegriff des Patentanspruchs 1, sowie ein Verfahren zur Herstellung eines derartigen Mehrlagenrohres.

Aus der GB-A-352 323 ist es bekannt, Mehrlagenrohre aus einem Metallstreifen z.B. auf Eisenbasis herzustellen, der beidseitig mit Kupfer oder einer Kupferverbindung beschichtet ist. Zum Verbinden der Lagen des zu einem Rohr gerollten Metallstreifens wird ein Lot verwendet, das zusätzlich auf die Kupferschicht aufgetragen worden ist, die ein Aufschmelzen des Lotes und damit – nach dem Abkühlen – ein festes Verbinden der Lagen gewährleistet.

Vergleichbar hiermit ist ein Verfahren zur Herstellung von Hohlkörpern aus Verbundfolien (DE-A-2 339 707). Diese Verbundfolien, die im wesentlichen aus Kunststoff bestehen, enthalten auch eine metallische Zwischenlage. Werden die verformten Folien einer Erwärmung ausgesetzt, so verschweisst der Kunststoff und damit entstehen dichte und in sich geschlossene Hohlkörper z.B. Tuben.

Während bei der DE-A-2 339 707 Korrosionsprobleme infolge des hohen Kunststoffanteiles keine Rolle spielen, ist bei den Rohren gemäss der GB-A-352 323 durch die Kupferbeschichtung ein Korrosionsschutz gegeben.

Bekannterweise werden Metallrohre mit Innen- und Aussenbeschichtungen aus Kunststoff versehen, um die Korrosionsanfälligkeit zu vermindern oder sonstige Eigenschaften der Trägerrohre zu verbessern.

Insbesondere bei Rohren, die als Leitungen für aggressive Flüssigkeit Verwendung finden, ist eine Schutzbeschichtung erforderlich, wenn es sich nicht um Metallrohre handelt, die aus korrosionsbeständigem Material bestehen.

Die Herstellung kunststoffbeschichteter Rohre, und zwar innen und aussen, ist sehr kompliziert und aufwendig. Insbesondere, wenn es sich um Rohre kleinen Durchmessers handelt, wie sie z.B. als Kraftstoffleitungen von Kraftfahrzeugen usw. verwendet werden. Ausserdem sind diese Rohre durch Feuchtigkeit und salzhaltigen Strassenschmutz auch von aussen korrosionsgefährdet.

Aufgabe der Erfindung ist es, ein innen und aussen mit Kunststoff beschichtetes Mehrlagenrohr aus Metall und ein Verfahren zur Herstellung desselben zu schaffen, bei dem die Beschichtung bereits bei dem Ausgangsmaterial vorhanden ist und bei der Fertigstellung sämtliche Innen- und Aussenflächen des Metallrohres bedeckt.

Gelöst wird diese Aufgabe erfindungsgemäss durch ein Mehrlagenrohr nach Anspruch 1, das aus einem beidseitig mit Kunststoff beschichteten Metallstreifen hergestellt worden ist, wobei die Herstellung so erfolgt, dass ein mit Kunststoff beschichteter und mit abgeschrägten Bandkanten versehener Metallstreifen unmittelbar nach dem Wickeln einer Erwärmung ausgesetzt wird, deren Temperatur ausreicht, um die Kunststoffbeschichtung auch zwischen den Lagen des Mehrlagenrohres derart aufzuschmelzen, dass bei der anschliessenden Abkühlung eine feste Verbindung zwischen den Metallschichten entsteht. Sinngemäss entsteht bei dieser Herstellung ein beschichtetes Mehrlagenrohr, welches einen Innen- und Aussenschutz aufweist, der sich über die gesamte Innen- und Aussenoberfläche des Metalles erstreckt.

Als Temperatur wird je nach Art der Beschichtung ein Bereich für die Erwärmung von 110 bis 400 °C vorgesehen. Die Dicke der Beschichtung reicht von 0,02 bis 0,1 mm, während die Ausgangswanddicke des Streifens je nach gewünschter Wanddicke des Rohres bei 0,25 bis 0,5 mm liegt.

Die Vorteile eines erfindungsgemässen Mehrlagenrohres zeigen sich insbesondere beim Einsatz in der Automobilherstellung, vor allem dann, wenn z.B. Kraftstoffe verwendet werden, die eine höhere Aggressivität wegen alkoholer Anteile im Kraftstoff (wie Methanol und Äthanol) aufweisen.

Als Metall kann u.a. auch Leichtmetall, wie z.B. Aluminium verwendet werden. Für die Beschichtung des Ausgangsstreifens wird ein dem Verwendungszweck entsprechender Kunststoff gewählt.

In der beigefügten Zeichnung ist ein Querschnitt eines erfindungsgemässen Mehrlagenrohres in vergrössertem Massstab dargestellt.

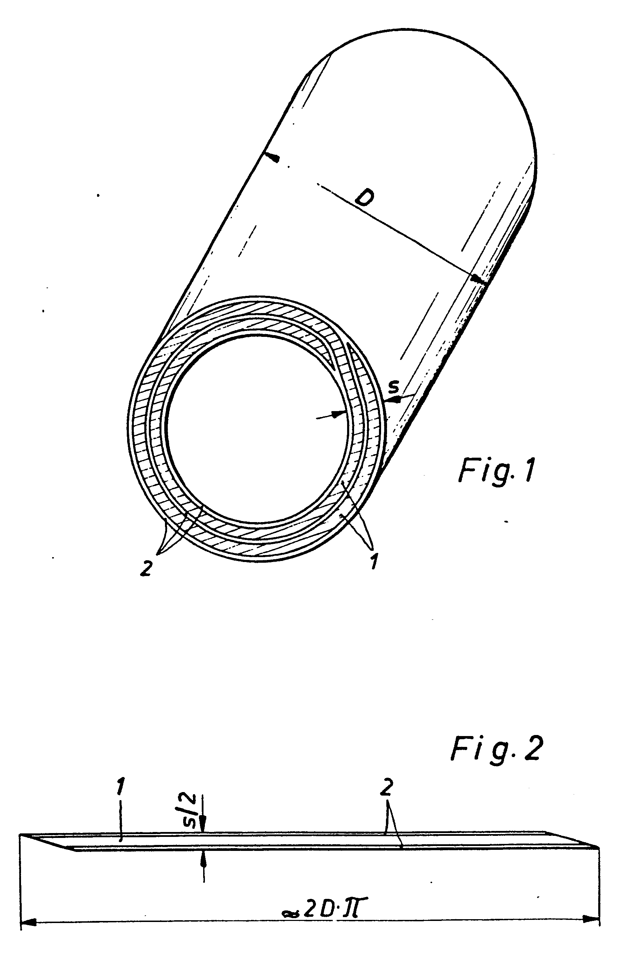

Aus der Figur 1 dieser Zeichnung ist ersichtlich, dass das Metallrohr 1 auf seinen gesamten Flächen eine Beschichtung besitzt.

Figur 2 zeigt den beiderseitig beschichteten Ausgangsmetallstreifen.

## Patentansprüche

1. Mehrlagenrohr, insbesondere für Kraftstoffleitungen von Kraftfahrzeugen, das innen und aussen korrosionsgeschützt ist, einen kleinen Durchmesser aufweist und aus einem mehrfachgewickelten, beidseitig beschichteten, der Länge des Rohres entsprechenden Metallstreifen (1) besteht, wobei die Verbindung der Wickellagen durch Aufschmelzen der Beschichtung erfolgt, dadurch gekennzeichnet, dass der Metallstreifen (1) beidseitig mit Kunststoff (2) beschichtet ist und eine Ausgangswanddicke von 0,25 bis 0,5 mm und die Beschichtung eine Dicke von 0,02 bis 0,1 mm aufweist.

2. Verfahren zur Herstellung eines Mehrlagenrohres nach Anspruch 1, dadurch gekennzeichnet, dass ein mit Kunststoff (2) beschichteter und mit abgeschrägten Bandkanten versehener Metallstreifen (1) unmittelbar nach dem Wickeln einer Erwärmung ausgesetzt wird, deren Temperatur ausreicht, um die Kunststoffbeschichtung auch zwischen den Lagen des Mehrlagenrohres derart aufzuschmelzen, dass bei der anschliessenden Abkühlung eine feste Verbindung zwischen den Metallschichten entsteht.

3. Verfahren nach Anspruch 2, dadurch gekennzeichnet, dass die Erwärmung in einem Temperaturbereich von 110 bis 400 °C erfolgt.

## Claims

1. Multilayer pipe, in particular for fuel lines of motor vehicles which is protected against corrosion on the inside and on the outside, has a small diameter and consists of a metal strip (1), wound multiply, coated on both sides, corresponding to the length of the pipe, in which the connection of the winding layers takes place by melting the coating on, characterized in that the metal strip (1) is coated on both sides with synthetic material (2) and has an initial wall thickness of 0.25 to 0.5 mm and the coating has a thickness of 0.02 to 0.1 mm.

2. Method for the production of a multilayer pipe according to Claim 1, characterized in that a metal strip (1), which is coated with synthetic material (2) and is provided with chamfered band edges, is subjected to heating immediately after winding, the temperature of which heating is sufficient to also melt the synthetic material coating on between the layers of the multilayer pipe, such that in the subsequent cooling a firm connection results between the metal layers.

3. Method according to Claim 2, characterized in that the heating takes place in a temperature range of 110 to 400 °C.

## Revendications

1. Tuyau à couches multiples, en particulier pour conduites de carburant de véhicules automobiles, qui est protégé de la corrosion à l'intérieur et à l'extérieur, présente un petit diamètre et est constitué d'une bande métallique (1), correspondant à la longueur du tuyau, recouverte des deux côtés et enroulée plusieurs fois, la liaison des couches enroulées résultant de la fusion du revêtement, caractérisé en ce que la bande métallique (1) est recouverte des deux côtés de matière plastique (2) et présente une épaisseur de paroi initiale de 0,25 à 0,5 mm, tandis que le revêtement présente une épaisseur de 0,02 à 0,1 mm.

2. Procédé pour la fabrication d'un tuyau à couches multiples selon la revendication 1, caractérisé en ce qu'une bande métallique (1), ayant des bords chanfreinés et revêtue de matière plastique (2), est exposée immédiatement après l'enroulage à un chauffage dont la température est suffisante pour faire fondre le revêtement de matière plastique également entre les couches du tuyau métallique, de sorte qu'il se crée, lors du refroidissement consécutif, une liaison résistante entre les couches métalliques.

3. Procédé selon la revendication 2, caractérisé en ce que le chauffage a lieu dans une zone de températures de 110 à 400 °C.

*Fig. 1*

*Fig. 2*